# FASCICULE DE BREVET EUROPEEN

(11) **EP 0 717 923 B1**
(45) Date de publication et mention de la délivrance du brevet: **06.10.1999**
(21) Numéro de dépôt: 95830507.0
(22) Date de dépôt: 07.12.1995
(51) Int. Cl.: A01G 9/02

(54) **Structure composite pour culture de légumes et fleurs**
Verbundstruktur für die Kultur von Gemüsen und Blumen
Composite structure for culturing vegetables and flowers

(30) Priorité: 19.12.1994 IT FI940228
(43) Date de publication de la demande: 26.06.1996
(73) Titulaire: VERDA s.r.l., 50141 Firenze (IT)
(72) Inventeur: Pini, Belisario, I-50141 Firenze (IT)
(74) Mandataire: Martini, Lazzaro

(56) Documents cités:
- EP-A- 0 098 474
- CH-A- 231 444
- DE-A- 2 730 279
- DE-A- 2 824 506
- DE-A- 3 618 833

## Description

La présente invention concerne une structure composable pour culture de légumes et fleurs.

Ils sont connus des différents modèles de récipients ou vases de différentes formes et dimensions pour culture de légumes et fleurs notamment pour l'emploi domestique, lesquels sont spécifiquement réalisés pour être utilisés singulièrement, déposés par terre ou sur des piédestaux aptes à offrir une superficie plate d'appui, ou autrement pendants d'une paroi. Un tel récipient est décrit dans CH-231 444.
Mais lesdits récipients connus ne résultent pas superposables pendant leurs utilisation.

Le but principal de la présente invention est celui d'éliminer les inconvénients précités.

A ce résultat on est parvenu, conformément à l'invention, en adoptant l'idée de réaliser une structure ayant les caractéristiques décrites dans la revendication 1. D'autres caractéristiques de la présente invention font l'objet des revendications dépendantes.

Les avantages qui dérivent de la présente invention consistent essentiellement en ce qu'il est possible de placer les plantes dans des éléments individuels, c'est-à-dire séparés, superposables et approchables entre eux de manière à former des zones de culture de quelconque hauteur, forme et dimension, en assurant la distribution des substances et des liquides dèstinés à alimenter le terreau des différents éléments de façon simple et efficace; que chaque élément de la structure est réalisable même par moulage de matériel plastique artificiel dans une gamme très vaste de formes, dimensions, couleurs ou combinaisons de couleurs, ce-ci permet de réaliser des parois entières ou zone aménagées, même angulaires, destinées au cultures; qu'une structure conformément à l'invention est de fabrication simple, économique et fiable même après une longue période de fonctionnement continu.

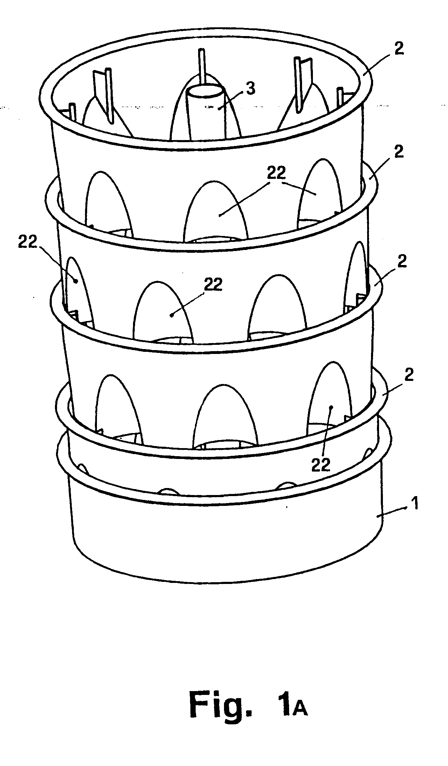

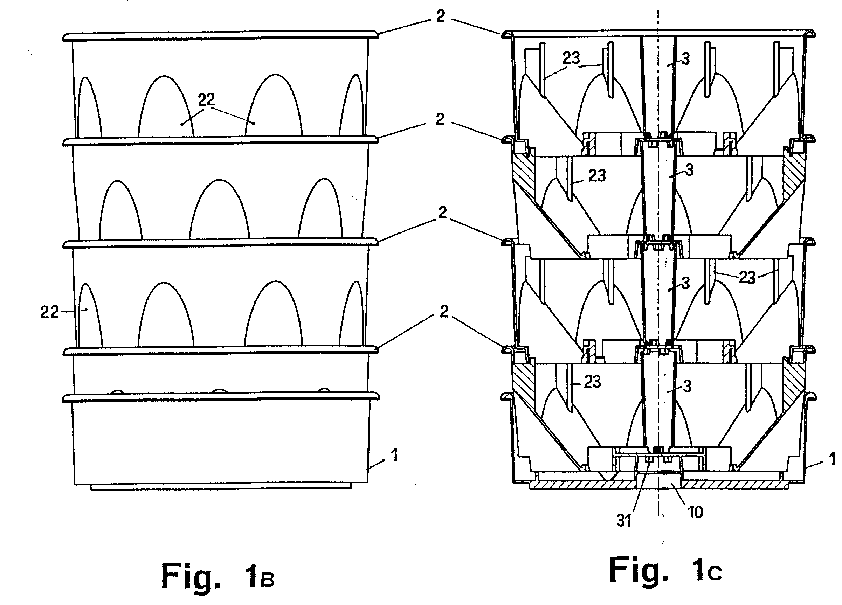

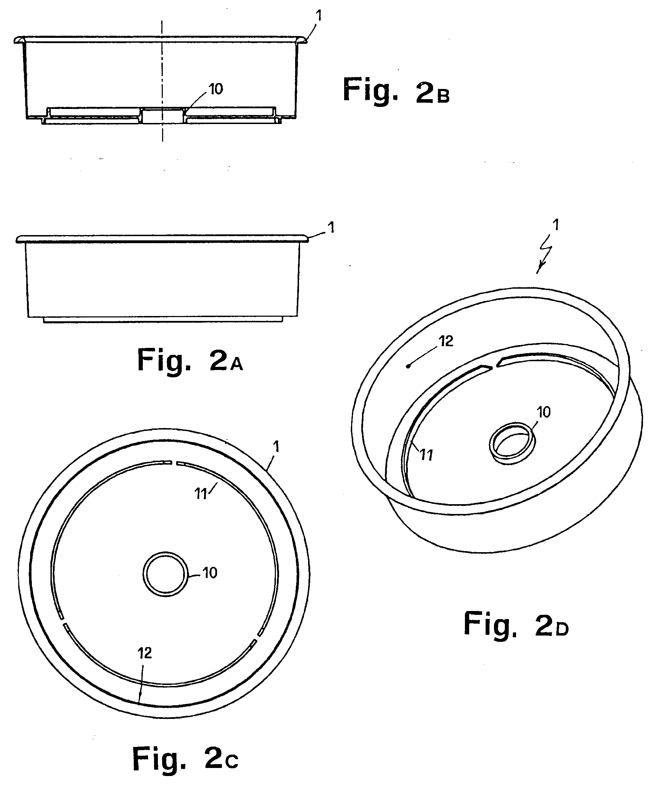

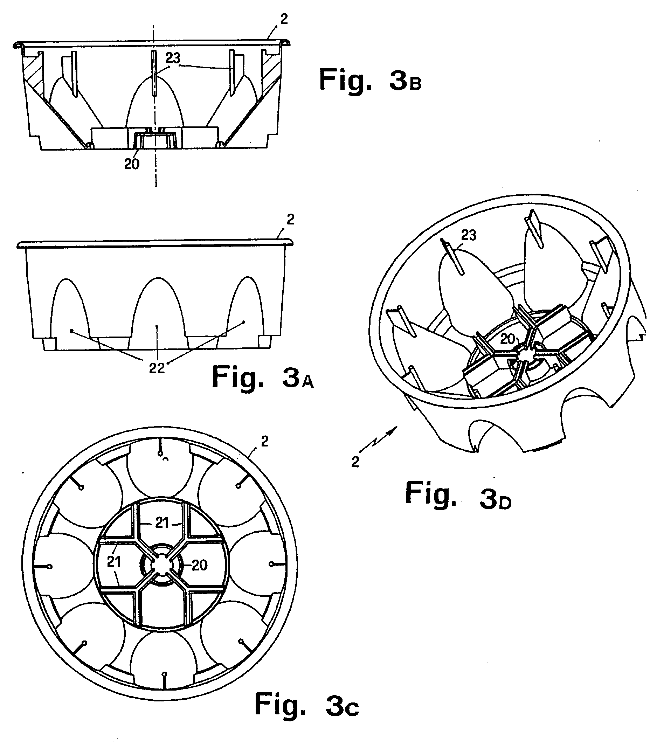

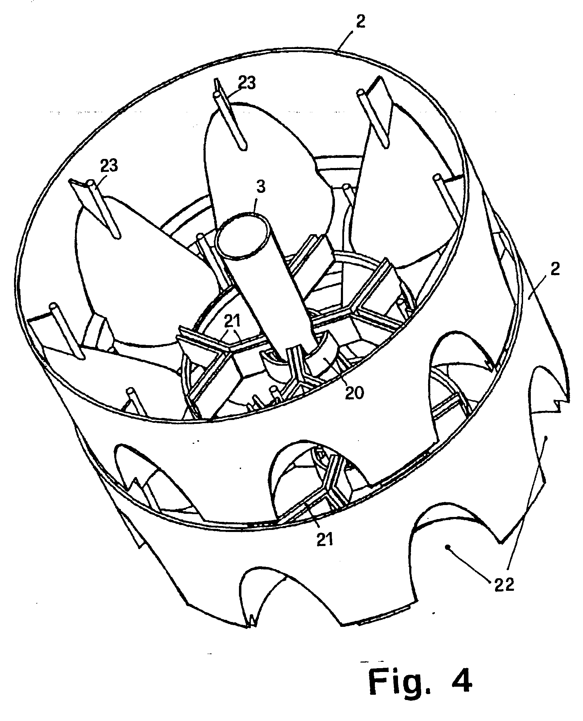

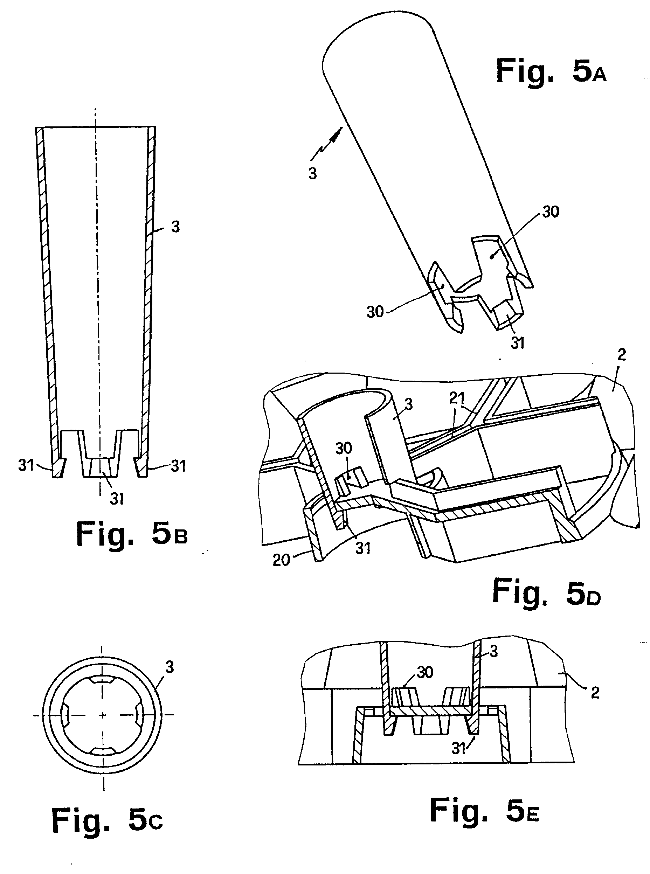

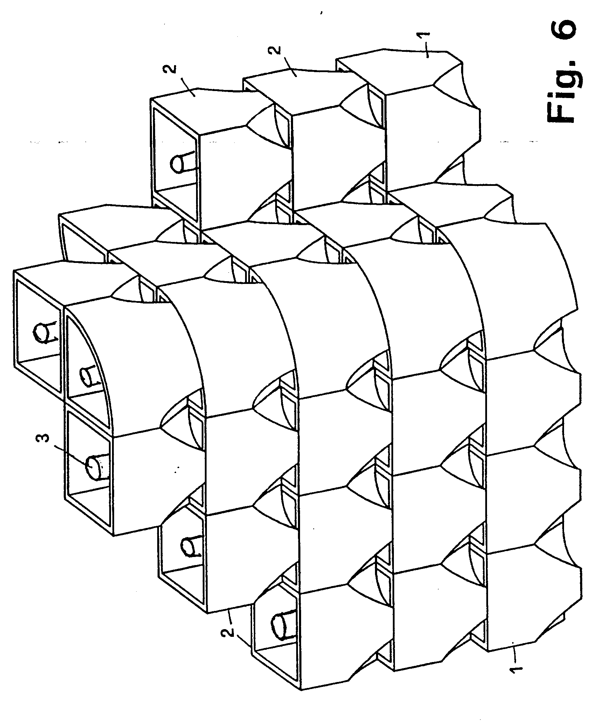

Ces avantages et caractéristiques de l'invention ainsi que d'autres seront plus et mieux compris de chaque homme du métier à la lumière de la description qui va suivre et à l'aide des dessins annexés donnés à titre d'exemplification pratique d'une forme concrète de réalisation, mais à ne pas considérer dans le sens limitatif; dessins sur lesquels: la Fig. 1A représente la vue en perspective d'une structure conformément à l'invention, où est visible une pile de récipients généralement cylindriques; la Fig. 1B représente la vue frontale de la structure de la Fig. 1A; la Fig. 1C représente la vue en coupe longitudinale centrale de la Fig. 1B; la Fig. 2A représente la vue frontale de l'élément de base de la structure de la Fig. 1A; la Fig. 2B représente la vue en coupe longitudinale de l'élément de la Fig. 2A; la Fig. 2C représente la vue en plan de l'élément de la Fig. 2A; la Fig. 2D représente la vue en perspective de l'élément de la Fig. 2A; la Fig. 3A représente la vue frontale d'un élément de la structure de la Fig. 1A situé au- dessus de celui de base; la Fig. 3B représente la vue en coupe longitudinale de l'élément de la Fig. 3A; la Fig. 3C représente la vue en plan de l'élément de la Fig. 3A; la Fig. 3D représente la vue en perspective de l'élément de la Fig. 3A; la Fig. 4 représente, en vue perspective, deux éléments superposés comme dans la Fig. 3D; la Fig. 5A représente, en perspective, un élément d'adduction de l'eau et d'autres substances d'alimentation pour la structure de la Fig. 1A; la Fig. 5B représente la vue en coupe longitudinale de l'élément de la Fig. 5A; la Fig. 5C représente la vue en plan de l'élément de la Fig. 5A; la Fig. 5D représente, en partielle vue perspective sectionée, le détail de la liaison de l'élément de la Fig. 5A à l'élément de la Fig. 2A; la Fig. 5E représente la vue en section verticale du détail de la Fig. 5D; la Fig. 6 représente une structure conformément à l'invention, réalisable en composant plusieurs éléments de différentes formes et dimensions.

Réduite à sa structure essentielle et en référence aux Fig. 1A - 5E des dessins annexés, une structure composable pour cultures de légumes et fleurs conformément à l'invention comprend un premier élément (1) de base généralement en forme de cylindre creux, avec le fond pourvu d'un trou passant délimité par une couronne (10) et d'une saillie annulaire (11) discontinue en proximité de la surface intérieure (12), et une pluralité de seconds éléments égaux entre eux, chacun desquels est constitué par un corps cylindrique creux (2) d'où émergent du fond plusieurs chambres (22), dèstinées aux plantations, délimitées supérieurement par une surface curviligne inclinée vers la base du corps (2), et ouvertes en correspondance de la surface latérale du corps (2). Au-dessus de chacune desdites chambres (22) il y a une paroi verticale (23): les extremités supérieures desdites parois (23) appartiennent à un plan commun horizontal, de manière à réaliser un élément d'appui pour le corps (2) situé au dessus.
A chacun desdits corps (2) est associé un élément tubulaire ayant un à axe vertical (3) pour l'adduction de l'eau et/ou autres substances d'alimentation des cultures. Ledit élément (3) est pourvu de moyens, avec plusieurs languettes flexibles en forme de crochet (31), pour permettre l'engagement, avec un léger forcement élastique, avec un collier (20) correspondant prévu sur le fond du corps (2), et de plusieurs ouvertures (30) de communication de la respective cavité avec des canaux (21) correspondants aussi prevus sur le fond du corps (2) et qui partent dudit collier (20) pour permettre la distribution des substances et des liquides introduits à travers le tube (3) au terreau contenu dans le corps (2).

Avantageusement, conformément à l'invention, lesdits éléments (1) et (2) sont réalisables par moulage de matériel plastique artificiel ou autrement en métal ou en céramique.

Avantageusement, conformément à l'invention et en référence aux Fig. 1A et 6 des dessins annexés, lesdits éléments (1) et (2) peuvent avoir une section circulaire, carré, rectangulaire ou en arc de cercle.
Il va de soi que lesdits éléments (1) et (2) peuvent avoir quelconque autre forme apte au but.
Ledit corps (3) est apte aussi à contenir une ou plusieurs pastilles de matériel fertilisant ou autres substances destinées à alimenter lentement le terreau en se dissolvant en contact avec les liquides ici introduits.

Le fonctionnement de la structure décrite est le suivant. Les liquides introduits à travers le tube (3) de chaque corps (2) supérieur de la structure, c'est-à-dire placé plus haut, en arrivant en correspondance du collier correspondant (20) irriguent le terreau y étant convoyés au moyen des canaux (21) respectifs, à travers les ouvertures (30) du corps (3). Quand on arrive à une condition de saturation du terreau, au moyen des mêmes canaux (21) le liquide s'écoule dans le tube (3) à travers lesdites ouvertures (30) et d'ici au tube (3) du corps (2) sous-jacent, de manière à alimenter le terreau ici contenu avec des modalités identiques à celles déjà décrites, et ainsi de suite pour tous les autres corps (2) sous-jacents. Dans l'élément (1) de base se recueille le liquide en excès, ce qu'il contribue à garder le juste dègré d'humidité. De cette manière, est assurée la bonne alimentation des plantes de chaque corps (2), permettant le développement dans les meilleures conditions possibles.

## Revendications

1. Structure composable pour cultures de légumes et fleurs comprenant un premier élément (1) de base généralement en forme de cylindre creux, avec le fond pourvu d'un trou passant délimité par une couronne (10) et d'une saillie annulaire (11) discontinue en proximité de la surface intérieure (12), et une pluralité de seconds éléments égaux entre eux, chacun desquels est constitué par un corps cylindrique creux (2) d'où émergent du fond plusieurs chambres (22), déstinées aux plantations, délimitées supérieurement par une surface curviligne inclinée vers la base du corps (2), et ouvertes en correspondance de la surface latérale du corps (2), au-dessus de chacune desdites chambres (22) il y a une paroi verticale (23), les extrémités supérieures desdites parois (23) appartiennent à un plan commun horizontal, de manière à réaliser un élément d'appui pour le corps (2) situé au dessus, à chacun desdits corps (2) est associé un élément tubulaire ayant un axe vertical (3) pour l'adduction de l'eau et/ou autres substances d'alimentation des cultures, et en ce que ledit élément (3) est pourvu de moyens, avec plusieurs languettes flexibles en forme de crochet (31), pour permettre l'engagement, avec un léger forcement élastique, avec un collier (20) correspondant prévu sur le fond du corps (2), et de plusieurs ouvertures (30) de communication de la respective cavité avec des canaux (21) correspondants aussi prévus sur le fond du corps (2) et qui partent dudit collier (20) pour permettre l'irrigation des substances et des liquides introduits à travers le tube (3) au terreau contenu dans le corps (2).

2. Structure selon la revendication 1 caractérisée en ce que lesdits éléments (1) et (2) sont réalisables par moulage de matériel plastique artificiel ou autrement en métal ou en céramique.

3. Structure selon la revendication 1 caractérisée en ce que lesdits éléments (1) et (2) ont une section circulaire.

4. Structure selon la revendication 1 caractérisée en ce que lesdits éléments (1) et (2) ont une section carré.

5. Structure selon la revendication 1 caractérisée en ce que lesdits éléments (1) et (2) ont une section rectangulaire.

6. Structure selon la revendication 1 caractérisée en ce que lesdits éléments (1) et (2) ont une section en arc de cercle.

## Claims

1. Built-up structure for the cultivation of vegetables and flowers, comprising a first base element (1) taking the general form of a hollow cylinder, the base having a through-hole delimited by a crown (10) and a continuous annular projection (11), close to the internal surface (12), and a plurality of second elements equal to one another, each of which is formed by a hollow cylindrical body (2) from the base of which a number of chambers (22) emerge, designed for the planting and delimited at the top by a curved surface inclined towards the base of the body (2) and open in the position corresponding to the lateral surface of the body (2), a vertical wall (23) being provided above each of the said chambers (22), the upper ends of the said walls being situated in one common horizontal plane, in such a way as to provide a supporting element for the body (2) situated above, each of the said bodies (2) having an associated tubular element (3), with a vertical axis and serving for the supply of water and/or other substances for feeding the cultures, the said element (30) being provided with means with a number of flexible tongues forming hooks (31) and providing a means of engagement by the exertion of a moderate elastic force with a corresponding collar (20) mounted on the base of the body (2), and with a number of apertures (30) for communication between the respective cavity and the corresponding channels (21) likewise provided on the base of the body (2) and starting from the said collar (20) to render possible the irrigation of the substances and liquids introduced via the tube (3) into the compost contained in the body (2).

2. Structure in accordance with Claim 1, characterized by the fact that the said elements (1) and (2) can be produced by the moulding of artificial plastic material or alternatively from metal or ceramic.

3. Structure in accordance with Claim 1, characterized by the fact that the said elements (1) and (2) are circular in section.

4. Structure in accordance with Claim 1, characterized by the fact that the said elements (1) and (2) are square in section.

5. Structure in accordance with Claim 1, characterized by the fact that the said elements (1) and (2) are rectangular in section.

6. Structure in accordance with Claim 1, characterized by the fact that the said elements (1) and (2) are arcuate in section.

## Patentansprüche

1. Zusammensetzbare Struktur für Gemüse- und Blumenkulturen, die folgende Bestandteile umfaßt: ein erstes Basiselement (1) in der allgemeinen Form eines Hohlzylinders, dessen Boden mit einem durchgehenden Loch, das von einem Kranz (10) begrenzt wird, und mit einem unterbrochenen, ringförmigen Vorsprung (11) in der Nähe der inneren Oberfläche (12) versehen ist, sowie eine Vielzahl von zweiten, untereinander gleichen Elementen, von denen jedes von einem hohlzylindrischen Körper (2) gebildet wird, von dessen Boden mehrere Kammern (22) ausgehen, die für Pflanzungen bestimmt sind und an der Oberseite von einer krummlinigen, zur Basis des Körpers (2) hin geneigten Oberfläche begrenzt werden und die im Bereich der seitlichen Oberfläche des Körpers (2) offen sind, wobei sich oberhalb einer jeden Kammer (22) eine senkrechte Wand (23) befindet, wobei die oberen Enden dieser Wände (23) in einer gemeinsamen horizontalen Ebene derart liegen, daß sie ein Abstützelement für den darüber befindlichen Körper (2) bilden, und wobei jedem der Körper (2) ein rohrförmiges Element mit vertikaler Achse (3) zur Zuführung von Wasser und/oder anderen Nährsubstanzen für die Kulturen zugeordnet ist, wobei weiterhin das Element (3) mit Einrichtungen mit mehreren flexiblen Zungen in Form eines Hakens (31) versehen ist, die bei Aufbringung einer geringen elastischen Kraft einen Eingriff mit einem entsprechenden Rand (20) ermöglichen, der am Boden des Körpers (2) vorgesehen ist, sowie mit mehreren Verbindungsöffnungen (30) für den jeweiligen Hohlraum mit entsprechenden Kanälen (21), die ebenfalls am Boden des Körpers (2) vorgesehen sind und die von dem Rand (20) ausgehen, um eine Bewässerung der im Körper (2) enthaltenen Erde mit den Substanzen und Flüssigkeiten zu ermöglichen, die durch das Rohr (3) zugeführt werden.

2. Struktur nach Anspruch 1, dadurch gekennzeichnet, daß die Elemente (1) und (2) durch Formen von Kunststoff, oder Metall oder Keramik realisierbar sind.

3. Struktur nach Anspruch 1, dadurch gekennzeichnet, daß die Elemente (1) und (2) einen kreisförmigen Querschnitt besitzen.

4. Struktur nach Anspruch 1, dadurch gekennzeichnet, daß die Elemente (1) und (2) einen quadratischen Querschnitt besitzen.

5. Struktur nach Anspruch 1, dadurch gekennzeichnet, daß die Elemente (1) und (2) einen rechtwinkeligen Querschnitt besitzen.

6. Struktur nach Anspruch 1, dadurch gekennzeichnet, daß die Elemente (1) und (2) einen kreisbogenförmigen Querschnitt besitzen.
